# EUROPEAN PATENT APPLICATION

(11) **EP 3 501 800 A1**
(43) Date of publication of application: **26.06.2019**
(21) Application number: 17382899.7
(22) Date of filing: 22.12.2017
(51) Int. Cl.: B29C 64/314, G02B 5/00, B29C 64/118, F21S 41/00

(54) **METHOD FOR MANUFACTURING AN AUTOMOTIVE PART AND LIGHTING DEVICE**

(71) Applicant: Valeo Iluminacion, 23600 Martos (ES)
(72) Inventor: MAYOR, Raquel, 23600 MARTOS (ES)

(57) **Abstract**

A method for manufacturing an automotive part. This method comprises the steps of providing a raw material (1) with a luminous transmittance higher than 70%, transforming the raw material (1) into a transformed raw material (6), feeding a 3D printing machine (2) with the transformed raw material (6), printing an automotive part (10) with the 3D printing machine (2), using the transformed raw material (6); and performing a post-processing step to improve the optical properties of the automotive part (10).

## Description

### TECHNICAL FIELD

This invention is related to the field of automotive lighting devices, and more particularly, to the field of manufacturing of automotive parts.

### STATE OF THE ART

When a prototype is made, mass production should be avoided, due to cost efficiency. 3D printing machines are expensive, but provide a more efficient way of manufacturing prototypes. However, they only work with raw materials which do not have optical properties, so they are not useful for manufacturing optical prototypes. There is therefore a prejudice against these machines for solving this problem. Optical parts are always moulded, even prototypes, so a specific mould must be used just for manufacturing one or two pieces. This invention provides a solution for this problem.

### DESCRIPTION OF THE INVENTION

The invention provides a solution for this problem by means of a method for manufacturing an automotive part according to claim 1. Preferred embodiments of the invention are defined in dependent claims.

In an inventive aspect, the invention provides a method for manufacturing an automotive part. This method comprises the steps of
providing a raw material with a luminous transmittance higher than 70%;
transforming the raw material into a transformed raw material;
feeding a 3D printing machine with the transformed raw material;
printing an automotive part with the 3D printing machine, using the transformed raw material; and
performing a post-processing step to improve the optical properties of the automotive part (10).

The raw material has a luminous transmittance higher than 70% according to UNE-EN ISO 13468-2:2006 with standard illuminant D65.

When a prototype is made, mass production should be avoided, due to cost efficiency. 3D printing machines are expensive, but provide a more efficient way of manufacturing prototypes. However, they only work with very specific raw materials, which are not suitable for optic parts, so they are not useful for manufacturing lighting prototypes. This invention provides a solution for this problem.

In some particular embodiments, the method further comprises the step of using the printed automotive part in an automotive prototype.

This method takes advantage of the specific requirements for prototype manufacturing. The same 3D machine is useful for any prototype part, so the cost of manufacturing a prototype is reduced by increasing the number of manufactured prototypes.

In some particular embodiments, the optically diffusive material comprises at least one of the following: polycarbonate or poly methyl methacrylate.

These materials ensure optical properties before and after the transformation. Hence, they are used as raw materials so that the 3D printing machine is directly fed with materials with optical properties. As a consequence, the piece exiting the 3D printing machine may be directly installed in an automotive vehicle.

In some particular embodiments, the post-processing step comprises at least one of a surface finishing, manual polishing or chemical polishing.

This surface finishing and/or polishing step is suitable for conferring or restoring some optical properties, such as diffusivity and homogeneity, in the printed automotive part, and to provide customized properties depending on the particular application of the part.

In some particular embodiments, the step of transforming the optically diffusive material comprises creating a filament of transformed optically diffusive material.

This shape of the transformed material is advantageously suitable for feeding a 3D printing machine as known in the state of art. However, other 3D printing machines may not need it.

In some particular embodiments, the step of transforming the raw material comprises
introducing the raw material in an internal mixer comprising an auger;
rotating the auger so that the raw material is carried towards a circular extruder head;
heating the raw material with a heater; and
making the heated raw material flow through the circular extruder head, thus creating the filament of transformed raw material.

In some particular embodiments, the raw material is dried at a temperature between 85°C and 95 °C during a period comprised between 19.5 and 20.5 hours before being introduced in the internal mixer.

This previous dry improves the feature of the raw material, making it suitable for being processed in the internal mixer.

In some particular embodiments, the heater heats the raw material so that its temperature is raised until 250°C.

This temperature is optimum from the behaviour of the raw material, providing the necessary fluidity for being extruded, but without being degraded.

In some particular embodiments, the method further comprises the step of cooling the filament in water, at a temperature comprised between 75°C and 95 °C.

This cooling is good for the filament to restore their mechanical properties gradually.

These steps allow obtaining a filament suitable for feeding a 3D printing machine out of standard raw material, such as PC or PMMA pellets, which are themselves not suitable for being used in such printing machines.

In some particular embodiments, the step of transforming the raw material further comprises the step of adding an additive to the raw material to reduce the viscosity of the raw material.

The addition of an additive may help to improve some mechanical properties of the transformed raw material, such as viscosity, so that the resulting transformed raw material is more optimally used in the feeding of a 3D printing machine.

In some particular embodiments, the automotive part is at least a portion of a lighting device, so it may be used in the design of lighting products.

In a further inventive aspect, the invention relates to a lighting device comprising an automotive part manufactured by a method according to any of the preceding claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a to 1d show different steps of a method for manufacturing an automotive part according to the invention.
Figure 2 shows a lighting device comprising the automotive part according to the invention.

### DETAILED DESCRIPTION OF THE INVENTION

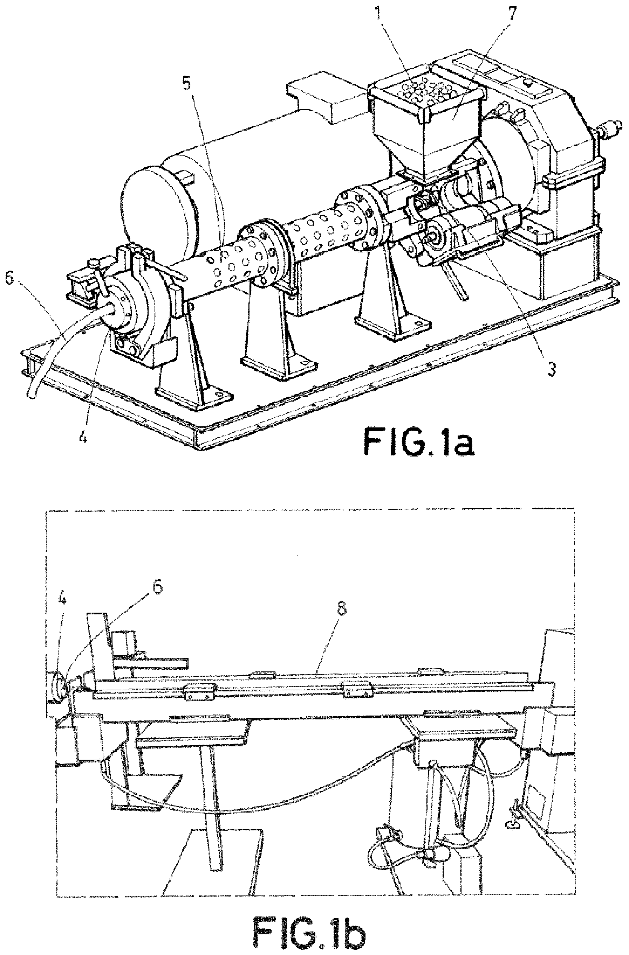

Figures 1a to 1d show different steps of a method for manufacturing an automotive part according to the invention.

Figure 1a shows the transformation of a raw material into a transformed raw material. The raw material 1 is fed into a hopper 7, thus falling into an internal mixer where an auger 3 moves it towards an extruder head 4.

In this particular case, this raw material is provided in the shape of pellets, which have been previously dried in a drier, at a temperature of substantially 90°C, which may be between 85°C and 95°C.

The shape and size of these pellets is not particularly relevant, as long as they are provided in a conventional format, as the person skilled in the art would consider.

Once the dried raw material has been introduced in the auger 3, a heater 5 heats the raw material 1 so that it becomes more ductile. In this particular embodiment, this step is carried out by increasing the temperature while the raw material is advancing towards the extruder head 4. The temperature is gradually raised until 250°C, so that at least some of the pellets are transformed into a more continuous piece of material.

While the raw material 1 is been heated, the auger 3 makes it flow along a duct towards the extruder head 4, and is forced to pass through this extruder head 4. Since the extruder head has a circular cross-section, the product of these steps is a filament 6 of a transformed raw material, which is suitable to feed a standard 3D printing machine.

As seen in Figure 1b, the resulting filament 6 is then submerged in a water bath 8, which is at a temperature of substantially 85°C, which may be comprised between 75°C and 95°C. This resulting filament is cooled so that it may recover their mechanical properties gradually, without inducing any additional stress which may affect the suitability of this filament for being used in a 3D printing machine. This cooled filament is then rolled and prepared to become a suitable material for feeding a 3D printing machine.

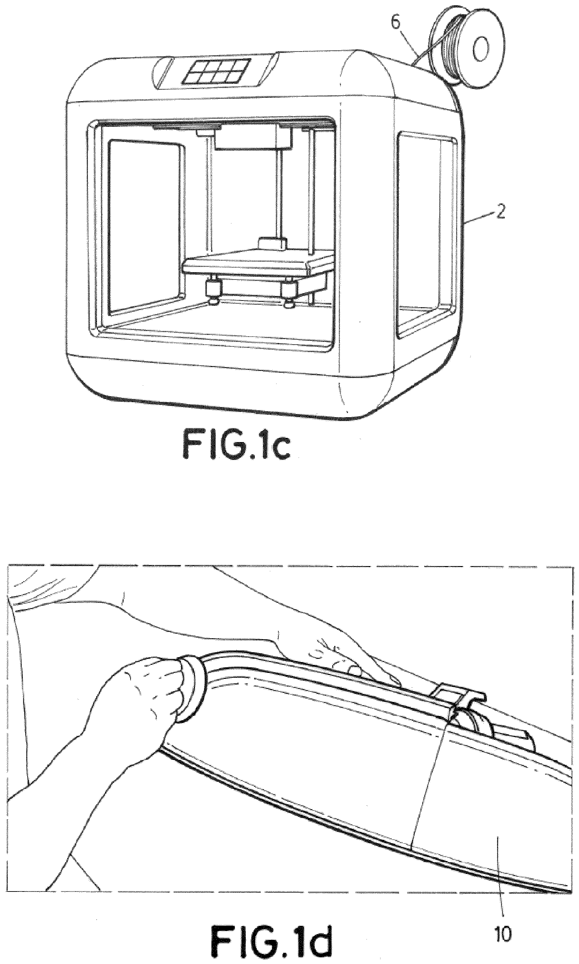

Figure 1c shows a 3D printing machine 2 which is fed with the transformed raw material. The filament 6 made of transformed raw material has the required properties to be accepted by a standard 3D printing machine 2 and the minimum diffusive properties to be part of a lighting device. Further, it is suitable for being conferred further optical properties in a subsequent step of this method.

The product of this step is an automotive part with the required shape, and made out of an advantageous material.

Figure 1d shows the step of conferring further optical properties to the printed automotive part 10 after being printed. This step may include polishing, finishing or any other suitable activity which improves the optical performance of the automotive part.

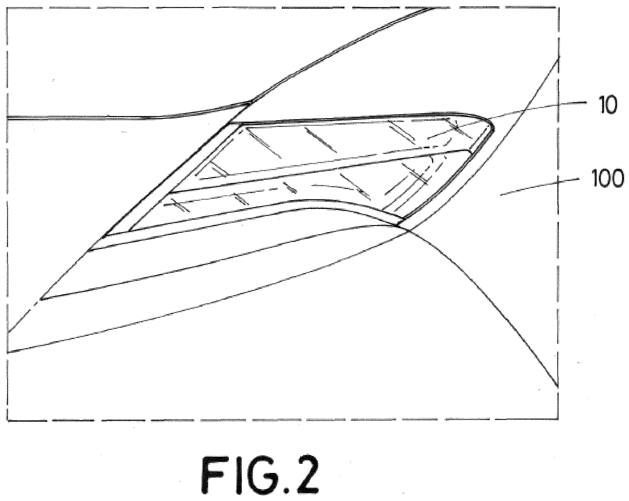

Figure 2 shows an automotive vehicle 100 using the automotive part manufactured by a method shown in the previous figures. This automotive part has a luminous transmittance higher than 70% according to UNE-EN ISO 13468-2:2006 with standard illuminant D65. In this case, the automotive part is a lighting device.

## Claims

1. Method for manufacturing an automotive part, the method comprising the steps of
providing a raw material (1) with a luminous transmittance higher than 70%;
transforming the raw material (1) into a transformed raw material (6);
feeding a 3D printing machine (2) with the transformed raw material (6);
printing an automotive part (10) with the 3D printing machine (2), using the transformed raw material (6); and
performing a post-processing step to improve the optical properties of the automotive part (10).

2. Method according to any of the preceding claims, wherein the raw material comprises a resin

3. Method according to claim 2, wherein the resin is one of the following polymers: polycarbonate or polymethylmethacrylate.

4. Method according to any of the preceding claims, wherein the post-processing step comprises at least one of a surface finishing, manual polishing or chemical polishing.

5. Method according to any of the preceding claims, wherein the step of transforming the raw material comprises creating a filament (6) of transformed raw material.

6. Method according to claim 5, wherein the step of transforming the raw material comprises
introducing the raw material (1) in an internal mixer comprising an auger (3);
rotating the auger (3) so that the raw material (1) is carried towards a circular extruded head (4);
heating the raw material (1) with a heater (5); and
making the heated raw material flow through the circular extruded head (4), thus creating the filament (6) of transformed raw material.

7. Method according to claim 6 wherein the raw material is dried at a temperature between 85°C and 95 °C during a period comprised between 19.5 and 20.5 hours before being introduced in the internal mixer.

8. Method according to any of claims 6 or 7, wherein the heater heats the raw material so that its temperature is raised until 250°C.

9. Method according to any of claims 6 to 8, further comprising the step of cooling the filament in water, at a temperature comprised between 75°C and 95 °C.

10. Method according to any of claims 5 to 9, wherein the step of transforming the raw material further comprises the step of adding an additive to the raw material to reduce the viscosity of the raw material.

11. Method according to any of the preceding claims, wherein the automotive part is at least a portion of a lighting device.

12. Lighting device comprising an automotive part manufactured by a method according to any of the preceding claims.
